# EUROPEAN PATENT APPLICATION

(11) **EP 4 080 607 A1**
(43) Date of publication of application: **26.10.2022**
(21) Application number: 20901138.6
(22) Date of filing: 18.12.2020
(51) Int. Cl.: H01M 4/36, H01M 4/525, H01M 4/505, H01M 4/485, H01M 4/62, H01M 10/052, C01G 53/00, C01G 33/00

(54) **POSITIVE ELECTRODE ACTIVE MATERIAL, METHOD FOR PRODUCING SAME, AND LITHIUM SECONDARY BATTERY INCLUDING SAME**

(30) Priority: 20.12.2019 KR 20190172485
(71) Applicant: POSCO, Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: CHOI, Kwon Young, Seoul 07987 (KR); NAM, Sang Cheol, Seoul 02587 (KR); SONG, Jung Hoon, Gwacheon-si, Gyeonggi-do 13835 (KR); PARK, Jong Il, Pohang-si, Gyeongsangbuk-do 37666 (KR); LEE, Sang Hyuk, Incheon 22405 (KR); KWON, Ohmin, Incheon 22018 (KR); PARK, Inchul, Incheon 22008 (KR)
(74) Representative: Potter Clarkson
(86) International application number: PCT/KR2020/018656
(87) International publication number: WO 2021/125877

(57) **Abstract**

The present exemplary embodiments relate to a positive electrode active material, a manufacturing method thereof, and a lithium secondary battery including the same. A positive active material for a lithium secondary battery according to an exemplary embodiment is a lithium metal oxide particle in the form of secondary particles including a plurality of primary particles: a first coating layer positioned on at least a part of the surface of the primary particle, and a second coating layer positioned over at least a portion of the secondary particle surface, the first coating layer comprising a first niobium compound, the second coating layer comprising the first niobium compound and a second niobium compound having a composition different from the first niobium compound.

## Description

### CROSS-REFERENCE TO RELATED APPLICATION

This application claims priority to and the benefit of Korean Patent Application No. 10-2019-0172485 filed in the Korean Intellectual Property Office on December 20, 2019, the entire contents of which are incorporated herein by reference.

### BACKGROUND OF THE INVENTION

### (a) Field of the Invention

A positive electrode active material, its manufacturing method, and a lithium secondary battery including the same.

### (b) Description of the Related Art

Recently, due to the explosively-increasing demand for IT mobile devices and small electric power drive devices (e-bikes, small electric vehicles, and the like) and the demand for electric vehicles with a mileage of 400 km or more, development of a secondary battery having high capacity and high energy density for driving these has been actively progressing, and in order to manufacture such a high-capacity battery, a high-capacity positive electrode active material is required.

Among the existing layered positive electrode active materials, LiNiO₂ has the highest capacity (275 mAh/g) but an easily-collapsing structure during the charge and discharge and low thermal stability due to the oxidation number problem and thus may be difficult to commercialize.

In order to solve this problem, a ternary NCM-based active material containing Li, Ni, Co, and Mn has been developed by substituting on unstable Ni sites with other stable transition metals (Co, Mn, and the like).

### SUMMARY OF THE INVENTION

In the present exemplary embodiment, it is intended to provide an positive electrode active material in which a coating layer containing a niobium compound is positioned on the surface of the primary particle and secondary particle. Accordingly, it is possible to reduce the high temperature cycle-life characteristic and resistance increase rate.

A positive active material for a lithium secondary battery according to an exemplary embodiment is a lithium metal oxide particle in the form of secondary particles including a plurality of primary particles: a first coating layer positioned on at least a part of the surface of the primary particle, and a second coating layer positioned over at least a portion of the secondary particle surface, the first coating layer comprising a first niobium compound, the second coating layer comprising the first niobium compound and a second niobium compound having a composition different from the first niobium compound.

The manufacturing method of a positive active material for a lithium secondary battery according to another exemplary embodiment includes:
preparing a coating composition containing niobium, mixing a metal precursor and a lithium raw material and then sintering to obtain a sintered body, preparing a mixture by adding the coating composition and the sintered body; and drying the mixture and then heat treatment, the heat treatment can be performed in the range of 100 degrees to 500 degrees.

A lithium secondary battery according to another exemplary embodiment may include a positive electrode including a positive active material according to an exemplary embodiment, a negative electrode, and a non-aqueous electrolyte.

A positive active material for a lithium secondary battery according to an exemplary embodiment is a lithium metal oxide particle in the form of secondary particles including a plurality of primary particles: a first coating layer positioned on at least a part of the surface of the primary particle, and a second coating layer positioned over at least a portion of the secondary particle surface, the first coating layer comprising a first niobium compound, the second coating layer comprising the first niobium compound and a second niobium compound having a composition different from the first niobium compound. Accordingly, it is possible to realize a lithium secondary battery having excellent initial efficiency and initial resistance.

In addition, the lithium secondary battery to which the positive active material is applied has excellent high temperature cycle-life characteristics and can significantly reduce the resistance increase rate.

### BRIEF DESCRIPTION OF THE DRAWINGS

FIG. 1A shows the 0.1C discharge capacity and initial resistance value according to the niobium content.
FIG. 1B shows the 0.1C discharge capacity and initial resistance value according to the secondary heat treatment temperature when the niobium content is 2,000ppm.
FIG. 2A shows the cycle-life and resistance increase rate at high temperature according to the niobium content.
FIG. 2B shows the high temperature cycle-life and high temperature resistance increase rate according to the secondary heat treatment temperature when the niobium content is 2,000 ppm.
FIG. 3A to FIG. 3C shows a cross-section photograph for a positive active material manufactured according to exemplary embodiment 3, an element mapping result for the cross-section, and a line scanning analysis result for the primary particle interface part, respectively.
FIG. 4 shows the structural analysis result for the primary particle interface part of the positive electrode active material manufactured according to the exemplary embodiment 3.
FIG. 5A and Fig. 5B is a cross-section photograph of the positive active material manufactured according to Example 3, respectively, and in the cross-section, the primary particle interface part is shown by measuring whether lithium is included using EELS.
FIG. 6 shows the SEM and EDS analysis results for the positive electrode active material surface manufactured according to the exemplary embodiment 3.
FIG. 7 shows the element mapping result for the cross-section of the positive active material manufactured according to the exemplary embodiment 3.
FIG. 8 shows the structural analysis result of the secondary particle surface using TEM analysis for the cross-section of the positive active material manufactured according to Embodiment 3.

### DETAILED DESCRIPTION OF THE EMBODIMENTS

The terms first, second and third are used to describe, but are not limited to, various parts, components, regions, layers and/or sections. These terms are used only to distinguish one part, component, region, layer or section from another part, component, region, layer or section. Accordingly, a first part, component, region, layer or section described below may be referred to as a second part, component, region, layer or section without departing from the scope of the present invention.

The terminology used herein is for the purpose of referring only to specific exemplary embodiments, and is not intended to limit the present invention. As used herein, the singular forms also include the plural forms unless the phrases clearly indicate the opposite. The meaning of "comprising" as used in the specification specifies a particular characteristic, region, integer, step, operation, element and/or component, and it does not exclude the presence or absence of another characteristic, region, integer, step, operation, element and/or component.

When a part is referred to as being "on" or "above" another part, it may be directly on or above the other part, or the other part may be involved in between. In contrast, when a part refers to being "directly on" another part, there is no intervening part in between.

Although not defined differently, all terms including technical and scientific terms used herein have the same meaning as commonly understood by a person of an ordinary skill in the technical field to which the present invention belongs. Commonly used terms defined in the dictionary are additionally interpreted as having a meaning consistent with the related art literature and the presently disclosed content, and unless defined, are not interpreted in an ideal or very formal meaning.

In addition, unless otherwise specified, % means wt%, and 1 ppm is 0.0001 wt%.

Hereinafter, an exemplary embodiment of the present invention will be described in detail so that a person of an ordinary skill in the technical field to which the present invention belongs can easily implement. As those skilled in the art would realize, the described embodiments may be modified in various different ways, all without departing from the spirit or scope of the present invention.

The positive electrode active material according to an exemplary embodiment includes lithium metal oxide particles.

The lithium metal oxide particle is in the form of a secondary particle including a plurality of primary particles.

In the positive electrode active material of the present exemplary embodiment, a first coating layer is positioned on at least part of the primary particle surface, and a second coating layer is positioned on at least part of the second particle surface.

The first coating layer includes a first niobium compound, and the second coating layer includes the first niobium compound and a second niobium compound. The second niobium compound has a different composition from the first niobium compound positioned on the first coating layer.

Here, the primary particle on which the first coating layer is positioned means the primary particle positioned inside the secondary particle. Therefore, the surface of the primary particle on which the first coating layer is positioned excludes the surface of the primary particle exposed to the outer surface of the secondary particle.

The first coating layer containing the first niobium compound is positioned on the surface of the primary particle positioned inside the secondary particle. In addition, a second coating layer including the first niobium compound and a second niobium compound having a composition different from that of the first niobium compound is positioned on the surface of the secondary particle. Accordingly, it is possible to significantly reduce the initial resistance at room temperature and the increase rate of resistance at high temperature.

Meanwhile, at least one of the first niobium compound and the second niobium compound includes an amorphous structure. Such a niobium compound having an amorphous structure has excellent ion conductivity. Therefore, when a first coating layer including a first niobium compound having an amorphous structure and a second coating layer including at least two types of niobium compound are included, a battery having excellent initial efficiency at room temperature and high temperature can be realized. In addition, it can significantly reduce the initial resistance at room temperature and the rate of increase in resistance at high temperature.

The first niobium compound may be at least one of Nb₂O₅, NbO and NbO₂.

In addition, the second niobium compound may be at least one of LiNbO₃, Nb₂O₅, Li₃NbO₄ and LiNb₃O₈.

The average thickness of the first coating layer is less than the average thickness of the second coating layer.

Specifically, the average thickness of the first coating layer may be 5 nm or less, more specifically, 0.01 nm to 5 nm, 0.5 nm to 3 nm range. If the average thickness of the first coating layer satisfies the range, the initial resistance at room temperature and the increase in resistance at high temperature can be reduced.

In addition, the average thickness of the second coating layer may be 30 nm or less, more specifically, 1 nm to 30 nm or 3 nm to 25 nm range. If the average thickness of the second coating layer satisfies the range, the initial resistance at room temperature and the resistance increase rate at high temperature can be reduced.

In the present exemplary embodiment, the second niobium compound included in the second coating layer may be LiNbO₃. In this case, the content of the LiNbO₃ may be 15.7 at% or more based on the entire second coating layer, more specifically, 15.7at% to 30at% or 15.7at% to 20at% range. If the content of LiNbO₃ included in the second coating layer satisfies the range, the initial resistance at room temperature and the resistance increase rate at high temperature can be significantly reduced.

On the other hand, the content of niobium (Nb) in the positive electrode active material of the present exemplary embodiment may be in the range of 4,000 ppm or less, more specifically 1,000 ppm to 2,500 ppm, or 1,000 ppm to 3,000 ppm, based on the entire positive electrode active material. If the content of niobium satisfies the range based on the entire positive electrode active material, the initial resistance at room temperature and the resistance increase rate at high temperature can be significantly reduced.

Meanwhile, in the present exemplary embodiment, the content of nickel in the metal in the lithium metal oxide may be 80 mol% or more. More specifically, the lithium metal oxide may be represented by, for example, Chemical Formula 1 below.

[Chemical Formula 1] LiₓNiₐCo_{b}Mn_{c}M1_{d}M2ₑO₂

In the Chemical Formula 1, M1 and M2 are at least one of Zr, Ti, Mg, Al, Ni, Mn, Zn, Fe, Cr, Mo and W, respectively, x is 0.90 ≤ x ≤ 1.07, a is 0.80 ≤ a < 1, b is 0 < b ≤ 0.3, c is 0 < c ≤ 0.3, d is 0 < d < 0.01, e is 0 < e < 0.01, and a + b + c + d + e = 1.

In this case, the a maybe 0.85 ≤ a < 1, more specifically, 0.90 ≤ a < 1.

Also, the b may be 0 < b ≤ 0.2 or 0 < b ≤ 0.1, and c may be 0 < c ≤ 0.2 or 0 < c ≤ 0.1. In addition, the M1 may be Zr, and the M2 may be Al. When M1 is Zr and M2 is Al, the positive active material of the present exemplary embodiment may include 3,000 ppm to 4,000 ppm of Zr, and 200 ppm to 350 ppm of Al, based on the entire lithium metal oxide.

As in the present exemplary embodiment, when the content of nickel in the metal in lithium metal oxide is 80% or more, that is, when a is 0.80 or more in Chemical Formula 1, a positive active material having a high-power characteristic can be implemented. Since the positive active material of the present exemplary embodiment having such a composition increases the energy density per volume, it is possible to improve the capacity of the battery to which it is applied, and it is also suitable for use for electric vehicles.

Next, the lithium metal oxide may include a core and a shell positioned on the surface of the core. The core and shell both have a layered crystalline structure. Also, in lithium metal oxide, nickel has a concentration gradient from the core part to the shell part, and there may be a concentration gradient in the region up to 95 length% of the entire radius of the lithium metal oxide. At this time, when the nickel concentration of the core part is 100 mol%, the nickel concentration of the shell part can be gradually decreased to 50 mol%. For convenience, the nickel is taken as an example, but the explanation of the concentration gradient can also be applied to the manganese and cobalt.

The manufacturing method of a positive active material for a lithium secondary battery according to another exemplary embodiment includes:
preparing a coating composition containing niobium, mixing a metal precursor and a lithium raw material and then sintering to obtain a sintered body, preparing a mixture by adding the coating composition and the sintered body; and drying the mixture and then heat treatment.

First, the step of preparing the coating composition may be performed by mixing ammonium niobium oxalate in distilled water.

Next, the step of mixing and sintering the metal precursor and the lithium raw material to obtain a sintered body may be performed by preparing the lithium metal oxide precursor by the method described in the following exemplary embodiment and then preparing and mixing the raw material of the doping element.

The step of sintering is performed by a conventional method, and may specifically include heating, cooling and pulverization processes.

Next, the coating composition and the sintered body are added to prepare a mixture.

The step of preparing the mixture may be performed by a method using the coating composition as a washing solution.

After preparing the mixture, it may include a step of heat treatment after drying. In the present exemplary embodiment, the heat treatment may be performed in a range of 100 degrees to 500 degrees, more specifically 200 to 450 degrees, 250 degrees to 400 degrees or 300 degrees to 350 degrees range.

The heat treatment time of the heat treatment step can be performed in the range of 3hr to 10hr, or 5hr to 10hr.

The heat treatment temperature and time is an appropriate temperature and time range that removes moisture remaining on the surface of the positive electrode active material treated with the coating composition and does not deteriorate the high temperature cycle-life characteristic. In addition, if this range is satisfied, a first coating layer containing a niobium compound is formed on a plurality of primary particle surfaces, and a niobium compound having a composition different from that of the niobium compound of the first coating layer is simultaneously formed on the secondary particle surface.

These process conditions will be described in more detail in an exemplary embodiment to be described later.

In another exemplary embodiment of the present invention, a lithium secondary battery including a positive electrode comprising a positive active material according to an embodiment of the present invention described above, a negative electrode including a negative active material, and an electrolyte positioned between the positive electrode and the negative electrode, is provided.

The description related to the positive active material will be omitted because it is the same as the above-described an exemplary embodiment of the present invention.

In an embodiment, the positive electrode active material layer may further include a binder and a conductive material.

The binder serves to attach the positive electrode active material particles well to each other, and to attach the positive electrode active material to the current collector well.

The conductive material is used to impart conductivity to the electrode, and any material may be used as long as it does not cause chemical change in the battery to be configured and is an electron conductive material.

The negative electrode includes a current collector and a negative electrode active material layer disposed on the current collector.

The negative electrode active material may include a material that reversibly intercalates/deintercalates lithium ions, a lithium metal, a lithium metal alloy, a material capable of doping/dedoping lithium, or a transition metal oxide.

As a material capable of reversibly intercalating/deintercalating lithium ions, for example, a carbon material, that is, a carbon-based negative electrode active material generally used in lithium secondary batteries may be mentioned. An example of the carbon-based negative electrode active material may include crystalline carbon, amorphous carbon, or a mixture thereof.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

Materials capable of doping and dedoping the lithium include Si, SiOₓ (0 < x < 2), Si-Y alloy (the Y is an element selected from the group consisting of alkali metal, alkaline earth metal element, group 13 element, group 14 element, transition metal, rare earth, and combination thereof, not Si), or the like. Or, Sn, SnO₂, Sn-Y (the Y is an element selected from the group consisting of alkali metal, alkaline earth metal, group 13 element, group 14 element, transition metal, rare earth element and combination thereof, not Sn), or the like.

Examples of the transition metal oxide include vanadium oxide and lithium vanadium oxide. The negative electrode active material layer includes a negative electrode active material and a binder, and optionally a conductive material.

The binder improves binding properties of negative electrode active material particles with one another and with a current collector.

The conductive material is included to cathode conductivity and any electrically conductive material may be used as a conductive material unless it causes a chemical change.

The negative electrode current collector may include one selected from a copper foil, a nickel foil, a stainless-steel foil, a titanium foil, a nickel foam, a copper foam, a polymer substrate coated with a conductive metal, and a combination thereof.

The negative electrode and the positive electrode are prepared by mixing an active material, a conductive material and a binder in a solvent to prepare an active material composition, and applying this composition to a current collector. Since such an electrode manufacturing method is widely known in the art, a detailed description will be omitted in this specification. As the solvent, N-methylpyrrolidone, etc. can be used, but is not limited thereto.

The non-aqueous electrolyte includes a non-aqueous organic solvent and a lithium salt.

The non-aqueous organic solvent serves as a medium for transmitting ions taking part in the electrochemical reaction of a lithium secondary battery.

The lithium salt dissolved in an organic solvent supplies a battery with lithium ions, basically operates the lithium secondary battery, and improves transportation of the lithium ions between the cathode and negative electrode.

In addition, the lithium secondary battery may include a separator between a positive electrode and a negative electrode. In addition, the separator may include polyethylene, polypropylene, polyvinylidene fluoride, and multi-layers thereof such as a polyethylene/polypropylene double-layered separator, a polyethylene/polypropylene/polyethylene triple-layered separator, or a polypropylene/polyethylene/polypropylene triple-layered separator.

A lithium secondary battery can be classified into a lithium ion battery, a lithium ion polymer battery, and a lithium polymer battery according to the type of separator and electrolyte used, and can be classified into cylindrical, prismatic, coin-type, pouch-type, etc. according to the shape. According to the size, it can be divided into bulk type and thin film type. The structure and manufacturing method of these batteries are widely known in this field, so a detailed description will be omitted.

Hereinafter, an embodiment of the present invention will be described in detail. However, this is provided as an example, and the present invention is not limited thereto, and the present invention is only defined by the scope of claims to be described later.

### Preparation Example 1 - Preparation of 88 mol% Ni positive electrode active material precursor

The positive electrode active material precursor was prepared by a general co-precipitation method. Specifically, for the composition of the core part to be (Ni_{0.98}Co_{0.01}Mn_{0.01})(OH)₂, and the composition of the shell part to be (Ni_{0.64}Co_{0.23}Mn_{0.13})(OH)₂, the supply solution was designed.

In addition, to form a CSG (Core Shell Gradient) structure, first supply tanks with high Ni concentration and second supply tanks with low Ni concentration were arranged in series. This is to keep the Ni concentration of the core part constant and change the Ni concentration of the shell part.

NiSO₄·6H₂O was used as a raw material for nickel, CoSO₄·7H₂O was used as a raw material for cobalt, and MnSO₄·H₂O was used as a raw material for manganese. These raw materials were dissolved in distilled water to prepare an aqueous metal salt solution.

Next, after preparing the co-precipitation reactor, N₂ was purged to prevent oxidation of metal ions during the co-precipitation reaction, and the temperature of the reactor was maintained at 50 °C.

NH₄(OH) was added as a chelating agent to the co-precipitation reactor, and NaOH was used for pH control. The precipitate obtained according to the co-precipitation process was filtered, washed with distilled water, and dried in an oven at 100 °C for 24 hours to prepare a precursor.

The composition of the prepared precursor was (Ni_{0.88}Co_{0.095}Mn_{0.025})(OH)₂, and the average particle diameter D50 was 14.8 µm.

### Comparative Example 1 - Manufacture of 88 mol% Ni positive electrode active material (no coating layer)

Based on 1 mole of the positive electrode active material precursor prepared in Preparation Example 1, 1.05 moles of LiOH·H₂O (Samjeon Chemical, battery grade), 3,400 ppm of ZrO₂ (Aldrich, 4N), and 280 ppm of Al Al(OH)₃ (Aldrich, 4N) was uniformly mixed to prepare a mixture.

The mixture was charged into a tube furnace and sintered while oxygen was inflowed, cooled to room temperature, and then pulverized to prepare sintered powder. The firing condition was maintained at 700 to 750°C for 16 hours after heat treatment at 480°C for 5 hours, and the temperature increase speed was 5°C/min. Then, after cooling to room temperature, the sintered powder was pulverized and classified to prepare a positive electrode active material including lithium metal oxide particles in the form of secondary particles including a plurality of primary particles.

### Comparative Example 2 - Positive electrode active material coated with 500 ppm boron

Based on 1 mole of the positive electrode active material precursor prepared in Preparation Example 1, 1.05 moles of LiOH·H₂O (Samjeon Chemical, battery grade), ZrO₂ (Aldrich, 4N) to be 3,400 ppm Zr, and Al(OH)₃ to be 280 ppm of Al (Aldrich, 4N) was uniformly mixed to prepare a mixture.

The mixture was charged into a tube furnace and sintered while oxygen was inflowed, cooled to room temperature, and then pulverized to prepare sintered powder. The firing condition was maintained at 700 to 750°C for 16 hours after heat treatment at 480°C for 5 hours, and the temperature increase speed was 5°C/min. Then, after cooling to room temperature, the sintered powder was pulverized and classified to prepare a positive electrode active material including lithium metal oxide particles in the form of secondary particles including a plurality of primary particles.

Next, for the water washing process, 100 g of the lithium metal oxide particle was added to 100 g of distilled water (D.I. water), stirred for 10 minutes, filtered, and then residual lithium on the surface of the washed lithium metal oxide particle was removed through vacuum-dry.

Thereafter, lithium metal oxide particles from which surface residual lithium has been removed and H₃BO₃ (Aldrich) were dry mixed at a weight ratio of 100:0.453 (lithium metal oxide particle: H₃BO₃), followed by secondary heat treatment at 300°C for 5 hr to obtain a positive active material with a coating layer containing boron on the particle's surface

### Comparative Example 3 - Ammonium Niobium Oxalate 2000ppm dry coating

Based on 1 mole of the positive electrode active material precursor prepared in Preparation Example 1, 1.05 moles of LiOH·H₂O (Samjeon Chemical, battery grade), ZrO₂ (Aldrich, 4N) to be 3,400 ppm Zr, and Al(OH)₃ to be 280 ppm of Al (Aldrich, 4N) was uniformly mixed to prepare a mixture.

The mixture was charged into a tube furnace and calcined while oxygen was inflowed, cooled to room temperature, and then pulverized to prepare a sintered powder. The sintering condition was maintained at 700 to 750°C for 16 hours after heat treatment at 480°C for 5 hours, and the temperature increase speed was 5°C/min. After cooling to room temperature, the sintered powder was pulverized and classified to prepare lithium metal oxide particles in the form of secondary particles including a plurality of primary particles.

Next, for the water washing process, 100 g of the lithium metal oxide particle was added to 100 g of distilled water (D.I. water), stirred for 10 minutes, filtered, and then residual lithium on the surface of the washed lithium metal oxide particle was removed through vacuum-dry.

After dry-mixing of lithium metal oxide particles from which surface residual lithium has been removed, and 2,000 ppm of ammonium niobium oxalate based on Nb, secondary heat treatment was performed at 300°C for 5 hr to apply to the surface of lithium metal oxide particles with a coating layer containing a niobium compound.

### Comparative Example 4 - Nb₂O₅ 2000 ppm dry coating

A positive active material was prepared by the same method as 2) of Comparative Example 3, except that 2,000 ppm of Nb₂O₅ was dry-mixed based on Nb.

### Reference Example 1 - Co(NO₃)₂ 1,000ppm (Based on Co content) Wet coating

Based on 1 mole of the positive electrode active material precursor prepared in Preparation Example 1, 1.05 moles of LiOH·H₂O (Samjeon Chemical, battery grade), ZrO₂ (Aldrich, 4N) to be 3,400 ppm Zr, and Al(OH)₃ to be 280 ppm of Al (Aldrich, 4N) was uniformly mixed to prepare a mixture.

The mixture was charged into a tube furnace and sintered while oxygen was inflowed, cooled to room temperature, and then pulverized to prepare a calcined powder. The sintering condition was maintained at 700 to 750°C for 16 hours after heat treatment at 480°C for 5 hours, and the temperature increase speed was 5°C/min. Then, after cooling to room temperature, the sintered powder was pulverized and classified to prepare lithium metal oxide particles.

Next, for the water washing process, 2.494 g of Co(NO₃)₂·6H₂O based on 1,000 ppm of Co was added to 100 g of distilled water (D.I. water), and stirred for 10 minutes, and then 250 g of lithium metal oxide particles were added and stirred for 10 minutes to obtained lithium metal oxide particles with a coating layer including CoSO₄ to the surface.

Thereafter, the lithium metal oxide particles with the coating layer containing the Co(NO₃)₂ were dried with a spray dryer and secondary heat treatment was performed at 300°C for 5 hr to prepare a positive electrode active material.

### Reference Example 2 - LiNO₃ Co(NO₃)₂ 1,000ppm (Based on Co content) Wet coating

A positive electrode active material was prepared in the same manner as in Reference Example 1, except that 2.494 g of Co(NO₃)₂·6H₂O and 0.591 g of LiNO₃ were added to distilled water in the water washing process.

### exemplary embodiment 1 - Ammonium niobium oxalate 1,000ppm wet coating

Based on 1 mole of the positive electrode active material precursor prepared in Preparation Example 1, 1.05 moles of LiOH·H₂O (Samjeon Chemical, battery grade), ZrO₂ (Aldrich, 4N) to be 3,400 ppm Zr, and Al(OH)₃ to be 280 ppm of Al (Aldrich, 4N) was uniformly mixed to prepare a mixture.

The mixture was charged into a tube furnace and sintered while oxygen was inflowed, cooled to room temperature, and then pulverized to prepare sintered powder. The sintering condition was maintained at 700 to 750°C for 16 hours after heat treatment at 480°C for 5 hours, and the temperature increase speed was 5°C/min. After cooling to room temperature, the sintered powder was pulverized and classified to prepare lithium metal oxide particles in the form of secondary particles including a plurality of primary particles.

Next, for the water washing process, 0.7205 g of ammonium niobium oxalate was added to 100 g of distilled water (D.I. water) so that the Nb content was 1,000 ppm, followed by stirring for 10 minutes. Then, 250 g of the lithium metal oxide particle was added and stirred for 10 minutes. Lithium metal oxide particles were obtained in which a first coating layer containing the first niobium compound was formed on the surface of the primary particle and a second coating layer containing the first and a second niobium compound was formed on the surface of the secondary particle.

After drying the lithium metal oxide particles with a spray dryer, secondary heat treatment was performed at 300°C for 5 hr to prepare a positive electrode active material.

### exemplary embodiment 2 - 2,000ppm of ammonium niobium oxalate wet coating

A positive electrode active material was manufactured in the same manner as in exemplary embodiment 1, except that 1.4409 g of ammonium niobium oxalate was added to distilled water in the water washing process.

### exemplary embodiment 3 - ammonium niobium oxalate 4,000ppm wet coating

A positive electrode active material was manufactured in the same manner as in exemplary embodiment 1, except that 2.8818 g of ammonium niobium oxalate was added to distilled water in the water washing process.

### exemplary embodiment 4 - Ammonium Niobium Oxalate 8,000ppm Wet Coating

A positive electrode active material was manufactured in the same manner as in exemplary embodiment 1, except that 5.7637 g of ammonium niobium oxalate was added to distilled water in the water washing process.

### exemplary embodiment 5 - Ammonium niobium oxalate 2,000ppm wet coating

Based on 1 mole of the positive electrode active material precursor prepared in Preparation Example 1, 1.05 moles of LiOH·H₂O (Samjeon Chemical, battery grade), ZrO₂ (Aldrich, 4N) to be 3,400 ppm Zr, and Al(OH)₃ to be 280 ppm of Al (Aldrich, 4N) was uniformly mixed to prepare a mixture.

The mixture was charged into a tube furnace and sintered while oxygen was inflowed, cooled to room temperature, and then pulverized to prepare a sintered powder. The sintering condition was maintained at 700 to 750°C for 16 hours after heat treatment at 480°C for 5 hours, and the temperature increase speed was 5°C/min. After cooling to room temperature, the fired powder was pulverized and classified to prepare lithium metal oxide particles in the form of secondary particles including a plurality of primary particles.

Next, for the water washing process, 1.4409 g of ammonium niobium oxalate was added so that the content of Nb was 2,000 ppm based on the positive electrode active material prepared in 100 g of distilled water (D.I. water) and stirred for 10 minutes. Then, 250 g of the lithium metal oxide particle was added and stirred for 10 minutes. Lithium metal oxide particles were obtained in which a first coating layer containing the first niobium compound was formed on the surface of the primary particle and a second coating layer containing the first and a second niobium compound was formed on the surface of the secondary particle.

Thereafter, the lithium metal oxide particles were dried with a spray dryer to prepare a positive electrode active material.

### exemplary embodiment 6 - Ammonium niobium oxalate 2,000ppm wet coating/250°Cheat treatment

The same method as in exemplary embodiment 5 was performed except that the lithium metal oxide particles obtained after the water washing process were dried and then subjected to secondary heat treatment at 250°C. A positive active material was prepared in which a first coating layer containing a first niobium compound was formed on the surface of the primary particle, and a second coating layer containing the first and a second niobium compound was formed on the surface of the secondary particle.

### exemplary embodiment 7 - Ammonium niobium oxalate 2,000ppm wet coating/350°Cheat treatment

The same method as in exemplary embodiment 5 was performed except that the lithium metal oxide particles obtained after the water washing process were dried and then secondary heat treated at 350 °C. A positive active material was prepared in which a first coating layer containing a first niobium compound was formed on the surface of the primary particle, and a second coating layer containing the first and second niobium compound was formed on the surface of the secondary particle.

### exemplary embodiment 8 - 2,000ppm of ammonium niobium oxalate wet coating/450°C heat treatment

The same method as in exemplary embodiment 5 was performed except that the lithium metal oxide particles obtained after the water washing process were dried and then secondary heat treated at 450 °C. A positive active material was prepared in which a first coating layer containing a first niobium compound was formed on the surface of the primary particle, and a second coating layer containing the first and second niobium compound was formed on the surface of the secondary particle.

### Comparative Example 5 - 4,000 ppm wet coating of ammonium niobium oxalate (solution pH 5 or higher)

Based on 1 mole of the positive electrode active material precursor prepared in Preparation Example 1, 1.05 moles of LiOH·H₂O (Samjeon Chemical, battery grade), ZrO₂ (Aldrich, 4N) to be 3,400 ppm Zr, and Al(OH)₃ to be 280 ppm of Al (Aldrich, 4N) was uniformly mixed to prepare a mixture.

The mixture was charged into a tube furnace and sintered while oxygen was inflowed, cooled to room temperature, and then pulverized to prepare a sintered powder. The sintered condition was maintained at 700 to 750°C for 16 hours after heat treatment at 480°C for 5 hours, and the temperature increase speed was 5°C/min. After cooling to room temperature, the fired powder was pulverized and classified to prepare lithium metal oxide particles in the form of secondary particles including a plurality of primary particles.

Next, for the water washing process, 2.8818 g of ammonium niobium oxalate was added to 100 g of distilled water (D.I. water) and stirred for 10 minutes. Then, while adding LiOH, the pH of the solution was set to 5 or higher to prepare a suspension by precipitation of LiNbO₃. 250 g of the lithium metal oxide particle was added and stirred for 10 minutes. Lithium metal oxide particles in which a coating layer containing the same lithium niobium compound (LiNbO₃) was formed on the surface of the primary particle and the surface of the secondary particle were obtained.

After drying the lithium metal oxide particles with a coating layer containing the same niobium compound (LiNbO₃) on the surface of the primary and secondary particles with a spray dryer, secondary heat treatment at 300°C for 5 hours to prepare a positive active material was performed.

### (Experimental Example 1) Electrochemical characteristic evaluation

After manufacturing a 2032 coin-type half cell using the positive active material prepared according to Comparative Example 1 to 3, Reference Examples 1 to 2 and exemplary embodiment 1 to 6, electrochemical evaluation was performed.

### (1) Coin-type half-cell manufacturing

Specifically, the positive active material, polyvinylidene fluoride binder (trade name: KF1100) and Denka black conductive material are mixed in a weight ratio of 92.5:3.5:4, and the mixture is mixed with N-methyl-2-pyrrolidone (N-Methyl-2-pyrrolidone) solvent so that the solid content is about 30 wt%. Accordingly, a positive electrode active material slurry was prepared.

The slurry was coated on aluminum foil (Al foil, thickness: 15 µm), which is a positive electrode current collector, using a doctor blade (Doctor blade), dried and rolled to prepare a positive electrode. The loading amount of the positive electrode was about 14.6 mg/cm², and the rolling density was about 3.1g/cm³.

The positive electrode, lithium metal negative electrode (thickness 200 µm, Honzo metal), electrolyte solution, and a polypropylene separator were used to prepare a 2032 coiN-type half-cell by a conventional method. The electrolyte solution is prepared by dissolving 1M LiPF₆ in a mixed solvent of ethylene carbonate, dimethyl carbonate and ethylmethyl carbonate (EMC) (mixing ratio EC:DMC:EMC=3:4:3 volume%), and then by adding 1.5 wt% of a vinylene carbonate (VC).

### (2) 25°C 0.1C discharge capacity and room temperature initial resistance evaluation

The coin-type half-cell prepared in the (1) was aged at room temperature (25° C. for 10 hours), and then a charge and discharge test was performed.

For capacity evaluation, 215mAh/g was used as a standard capacity, and CC/CV 2.5-4.25V, 1/20C cut-off was applied for charge and discharge conditions. Initial capacity was performed under 0.1C charge / 0.1C discharge condition.

The resistance was calculated by measuring the voltage fluctuation for 60 seconds after applying the 0.2C discharge current at 100% of the 4.25V charge at 0.2C. The results are shown in Table 1 below.

Referring to Table 1 below, in the case of the battery to which the positive active material of Comparative Example 1 without a coating layer is applied, it can be seen that the initial efficiency at room temperature is significantly reduced.

In addition, it can be seen that the initial resistance at room temperature is very high in the case of the battery to which the positive active material of Comparative Example 2, which has a coating layer containing boron compound, is applied.

In addition, when compared with the battery to which the positive active material of Comparative Examples 3 and 4 including a niobium compound and a coating layer formed using a dry coating method is applied, in the case of a battery to which the positive electrode active material of exemplary embodiments in which a first and second coating layer containing a niobium compound is formed on the primary particle and secondary particle surface using a wet coating method is applied, it can be seen that the initial resistance value is significantly deteriorated while the initial efficiency is excellent at room temperature.

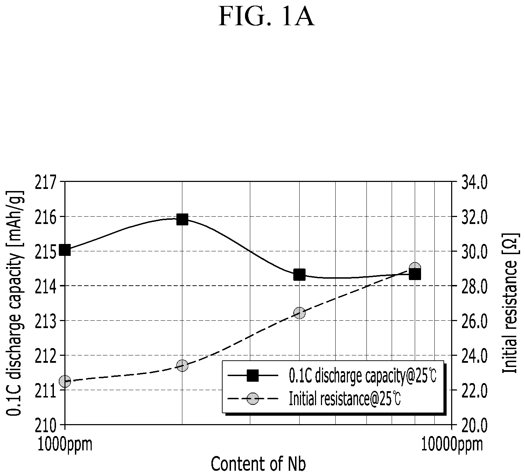

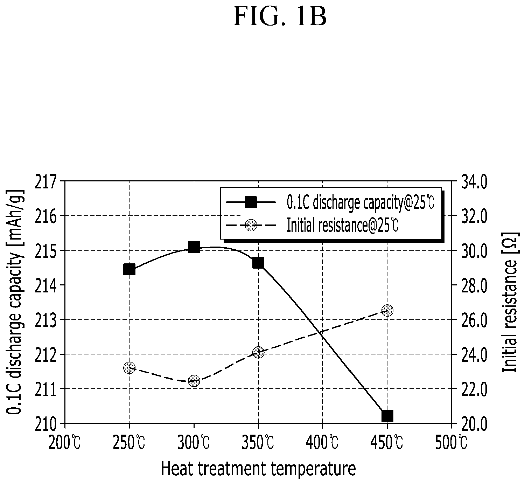

Next, the 0.1C discharge capacity and the initial resistance value according to the niobium content are shown in Fig. 1A. In addition, when the niobium content is 2,000ppm, the 0.1C discharge capacity and the initial resistance value according to the secondary heat treatment temperature are shown in Fig. 1B.

Referring to FIG. 1A, it can be confirmed that the optimum value is exhibited when the niobium content is 2,000 ppm. Also, Referring to FIG. 1B, it can be seen that the optimum value is shown when the niobium content is 2,000 ppm and the secondary heat treatment temperature is 300°C to 350°C range.

### (Experimental Example 2) 45°C cycle-life and resistance increase rate evaluation

Using the positive active material of Comparative Example 1 to 3, Reference Examples 1 to 2 and exemplary embodiment 1 to 6, a coin-type half-cell was manufactured by the same method as 1 in Experimental Example 1. After aging for 10 hours at room temperature (25°C), charge and discharge tests were performed.

For capacity evaluation, 215mAh/g was used as a standard capacity, and CC/CV 2.5-4.25V, 1/20C cut-off was applied for charge and discharge conditions. Initial capacity was performed under 0.2C charge/0.2Cdischarge condition.

The high-temperature cycle characteristic was measured 30 times with 0.3C charge / 0.3C discharge condition at high temperature 45°C, and then the 30th capacity ratio compared to the first capacity was measured. The resistance was calculated by measuring the voltage change 60 seconds after applying the discharge current at 100% of the 4.25V charge. The results for this are shown in Table 1 below.

Referring to Table 1 below, in the case of the battery to which the positive active material of Comparative Example 1 without a coating layer is applied, the cycle-life characteristic at room temperature deteriorates. At the same time, it can be seen that the resistance increase rate is very high and the initial efficiency drops significantly.

In addition, it can be seen that the initial resistance at room temperature is very high in the case of the battery to which the positive active material of Comparative Example 2, which has a coating layer containing boron compound, is applied.

In addition, when compared with the battery to which the positive active material of Comparative Examples 3 and 4 including a niobium compound and a coating layer formed using a dry coating method is applied, in the case of a battery to which the positive active material of exemplary embodiments including a coating layer formed by using a wet coating method on a niobium compound is applied, while the initial efficiency is excellent, it can be seen that the initial resistance value is significantly deteriorated.

On the other hand, the positive active material of Comparative Example 5 containing the same niobium compound, that is, LNbO₃ on the surface of the primary particle and the surface of the secondary particle, has a large initial resistance value. It can be seen that the resistance increase rate at high temperature is also increased when compared with the exemplary embodiments.

**(Table 1)**

| | 25°C | | | | 45°C | | | | |
|---|---|---|---|---|---|---|---|---|---|
| | 0.1C Charging amount [mAh/g] | 0.1C Dischargin g amount [mAh/g] | 1^{st} efficiency [%] | initial resistance [Ω] | cycle-life [%] | 1st resistance [Ω] | 30th resistance [Ω] | resistance increase [Ω] | resistance increase rate [%] |
| Comparati ve Example 1 | 234.1 | 207.5 | 88.6 | 19.0 | 80.3 | 17.4 | 30.3 | 12.8 | 73.8 |
| Comparati ve Example 2 | 235.5 | 214.2 | 91.0 | 41.5 | 90.8 | 22.6 | 49.5 | 26.9 | 118.8 |
| Comparati ve Example 3 | 234 | 210.5 | 90.0 | 21 | 85 | 18.3 | 32.5 | 14.2 | 77.6 |
| Comparati ve Example 4 | 234.1 | 211.3 | 90.3 | 19.5 | 86 | 17.9 | 31.5 | 13.6 | 76.0 |
| Reference Example 1 | 233.8 | 213.5 | 91.3 | 83.8 | 48.8 | 29.2 | 101.7 | 72.5 | 248.4 |
| Reference Example 2 | 233.1 | 212.6 | 91.2 | 93.8 | 45.1 | 36.1 | 143.1 | 107 | 296.7 |
| exemplary embodime nt 1 | 230 | 215 | 93.5 | 22.5 | 92.8 | 14.9 | 24.9 | 10 | 67.1 |
| exemplary embodime nt 2 | 230.7 | 215.9 | 93.6 | 23.4 | 93.1 | 15.7 | 25.7 | 10 | 64.1 |
| exemplary embodime nt 3 | 231 | 214.3 | 92.8 | 26.4 | 87.2 | 16.1 | 29.9 | 13.8 | 85.8 |
| exemplary embodime nt 4 | 229.8 | 214.3 | 93.3 | 29 | 82.7 | 18 | 38.7 | 20.7 | 114.7 |
| exemplary embodime nt 5 | 230.5 | 213.5 | 92.6 | 21.3 | 90.5 | 14.7 | 24.9 | 10.2 | 69.3 |
| exemplary embodime nt 6 | 230.6 | 214.5 | 93 | 23.2 | 91.4 | 14.8 | 26.1 | 11.3 | 76.3 |
| exemplary embodime nt 7 | 231.6 | 214.6 | 92.7 | 24.1 | 92.2 | 15.1 | 27.3 | 12.2 | 80.8 |
| Comparati ve Example 5 | 231.5 | 214.0 | 92.8 | 27.0 | 86.9 | 16.7 | 32.1 | 15.4 | 92.2 |

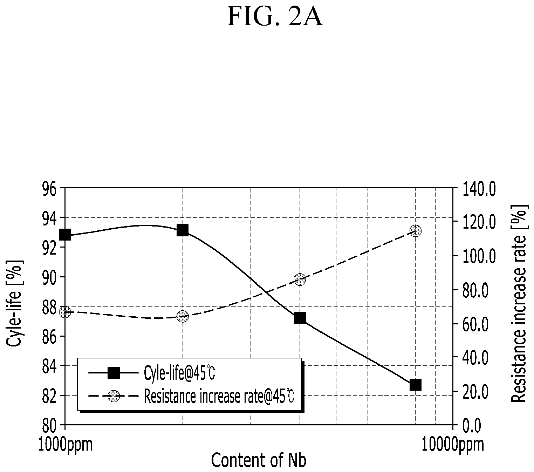

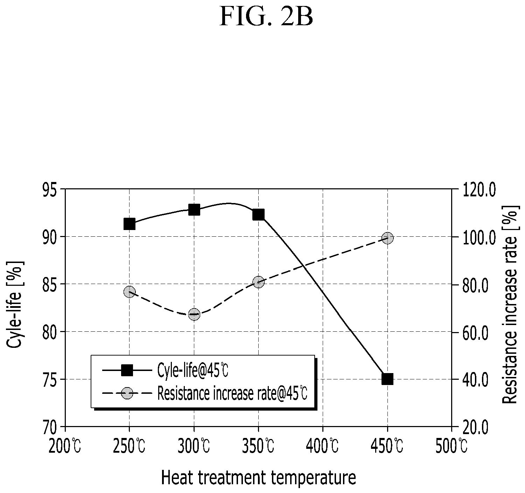

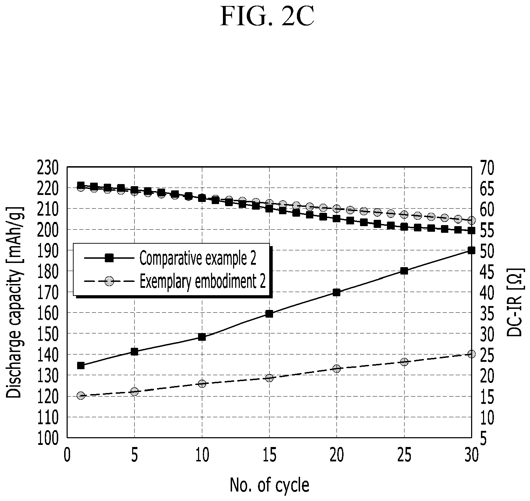

On the other hand, the cycle-life and resistance increase rate at high temperature according to the content of niobium are shown in Fig. 2A. When the niobium content is 2,000ppm, the high temperature cycle-life and the high temperature resistance increase rate according to the secondary heat treatment temperature are shown in Fig. 2B. In addition, in case of applying the positive active material prepared according to Comparative Example 2 with a boron coating layer formed, and in case of applying the positive electrode active material according to Embodiment 2 in which a coating layer containing a niobium compound is formed on both the interface of the primary particle and the interface of the secondary particle, the cycle-life and resistance increase rate were in Fig. 2C.

Referring to FIG. 2A, the optimum value was shown when the niobium content was 2,000 ppm.

Also, Referring to FIG. 2B, it can be seen that both cycle-life and resistance increase characteristics at high temperature are excellent when the secondary heat treatment temperature is 300°C to 350°C range.

Referring to FIG. 2C, in the case of the battery to which the positive active material of the exemplary embodiment is applied, the cycle-life characteristic at high temperature is excellent. It can be seen that the resistance increase rate at simultaneously high temperature can be significantly reduced.

### (Experimental Example 3) TEM analysis of the first particle interface component

After cutting the cross-section of the positive active material prepared in exemplary embodiment 3 with a FIB (Focused Ion Beam, SEIKO 3050SE), it was analyzed with a TEM (Transmission electron microscope, JEOL 2100F) analysis equipment.

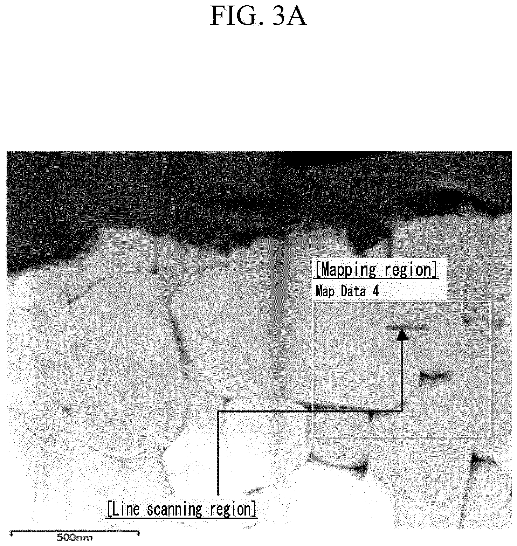

Specifically, after conducting element mapping analysis on the cross-section of the positive electrode active material and line scanning analysis on the components of the primary particle interface, the results are shown in FIG. 3A to FIG. 3C.

Referring to FIG. 3A to Fig. 3C, it can be seen that niobium is uniformly coated on the primary particle interface in the positive active material manufactured according to the exemplary embodiment 3.

### (Experimental Example 4) TEM analysis of the structure of the primary particle interface

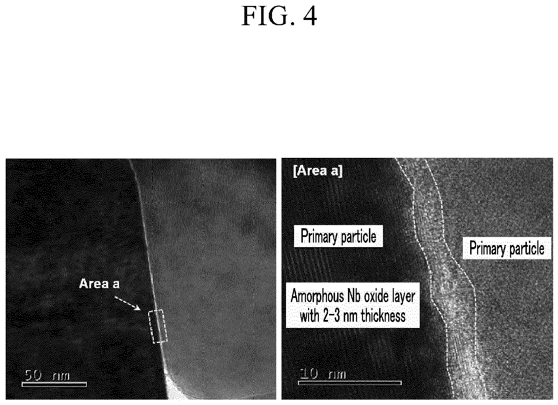

After cutting the cross-section of the positive active material prepared in exemplary embodiment 3 with a FIB (Focused Ion Beam, SEIKO 3050SE), it was analyzed with a TEM (Transmission electron microscope, JEOL 2100F) analysis equipment. Specifically, after analyzing the structure of the primary particle interface in the positive electrode active material cross-section, the result is shown in FIG. 4.

Referring to FIG. 4, it can be seen that the positive electrode active material manufactured according to exemplary embodiment 3 has a coating layer including amorphous niobium oxide having a thickness of 2 to 3 nm on the primary particle interface.

### (Experimental Example 5) Lithium analysis using EELS for the primary particle interface

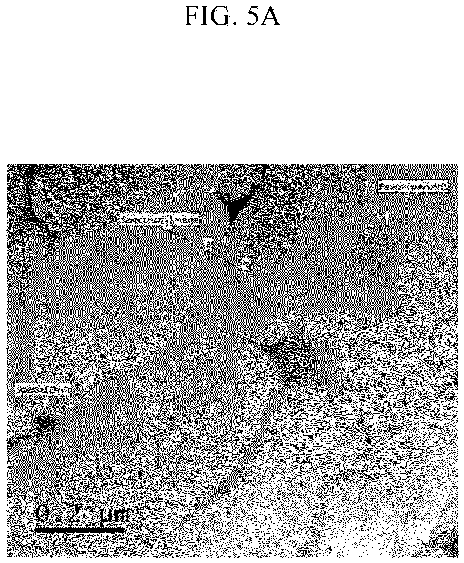

Cut the cross-section of the positive electrode active material prepared in exemplary embodiment 3 with FIB (Focused Ion Beam, SEIKO 3050SE), and analyze the cross-section of the positive electrode active material with STEM (Scanning Transmission Electron Microscopy, JEOL ARM 200F) analysis equipment, then the results were shown in FIG. 5A.

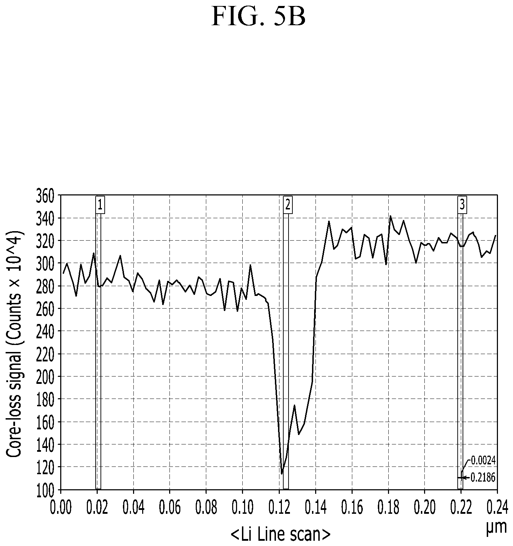

Next, As shown in FIG. 5A, for the primary particle interface part of the positive electrode active material, using EELS (Electron Energy Loss Spectroscopy, GATAN GIF Quantum ER 965) equipment, analyze whether lithium is included in the coating layer positioned on the interface part of the primary particle. The analysis result is shown in FIG. 5B.

Referring to FIG. 5A and FIG. 5B, the interface part that is the surface of the primary particle, that is, lithium was not observed at point 2 in FIG. 5B.

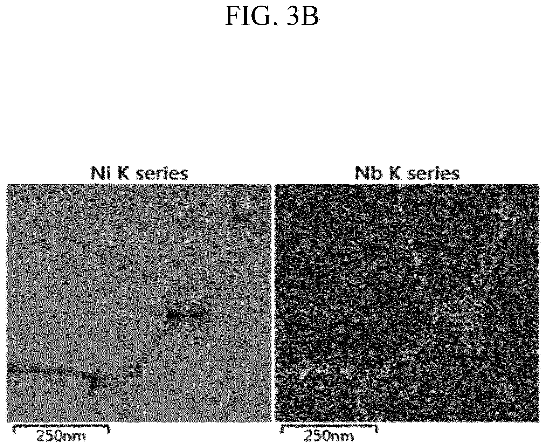

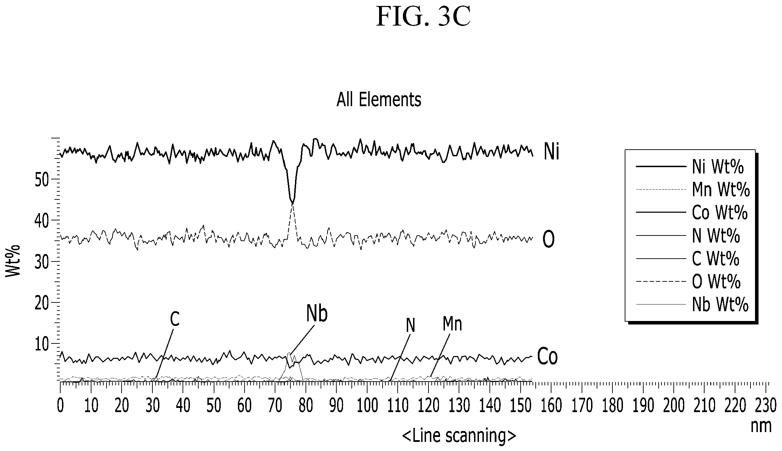

Therefore, comprehensively considering the result of FIG. 3B, Fig. 3C, Fig. 5A and Fig. 5B, in case of manufacturing positive electrdoe active material according to the present exemplary embodiment, the first coating layer positioned on the surface of the primary particles is considered to be a coating layer that does not contain lithium, that is, contains niobium oxide.

### (Experimental Example 6) SEM analysis of secondary particle surface

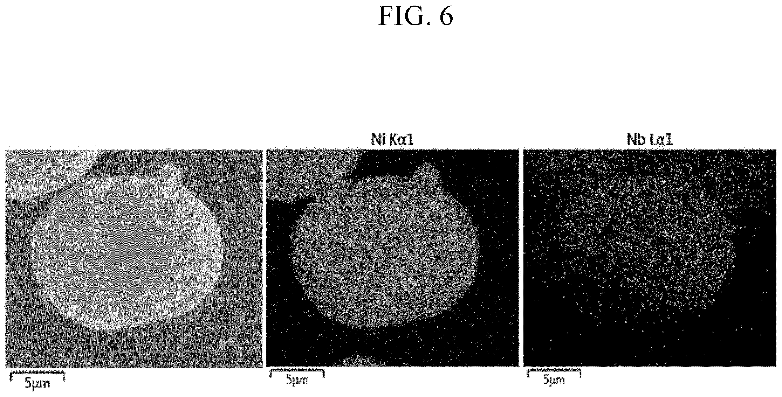

SEM (Scanning electron microscope, JEOL JSM-6610) and EDS analysis were performed on the surface of the positive active material prepared in exemplary embodiment 3, and the result is shown in FIG. 6.

Referring to FIG. 6, it can be seen that in the positive active material manufactured according to the present exemplary embodiment, the coating layer containing the niobium compound is uniformly coated even on the secondary particle surface.

### (Experimental Example 7) TEM analysis of secondary particle surface components

The positive electrode active material prepared in exemplary embodiment 3 was cross-sectioned with a FIB (Focused Ion Beam, SEIKO 3050SE) and then analyzed with a TEM (Transmission electron microscope, JEOL 2100F) analysis equipment.

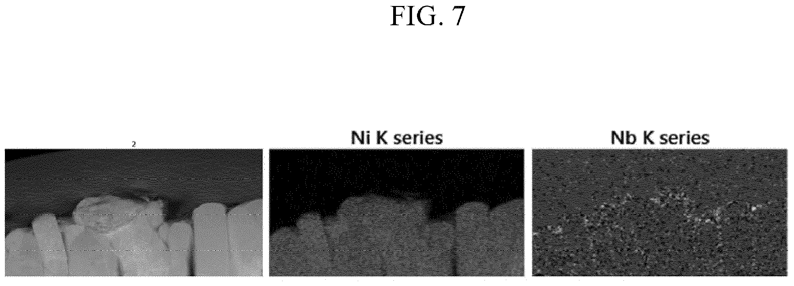

Specifically, by performing element mapping on the cross-section of the positive active material, the result is shown in FIG. 7.

Referring to FIG. 7, it can be seen that in the positive active material manufactured according to the present exemplary embodiment, the coating layer containing the niobium compound is uniformly coated on the secondary particle surface.

### (Experimental Example 8) TEM analysis of secondary particle surface structure

The positive electrode active material prepared in exemplary embodiment 3 was cross-sectioned with a FIB (Focused Ion Beam, SEIKO 3050SE) and analyzed with a TEM (Transmission electron microscope, JEOL 2100F) analysis equipment.

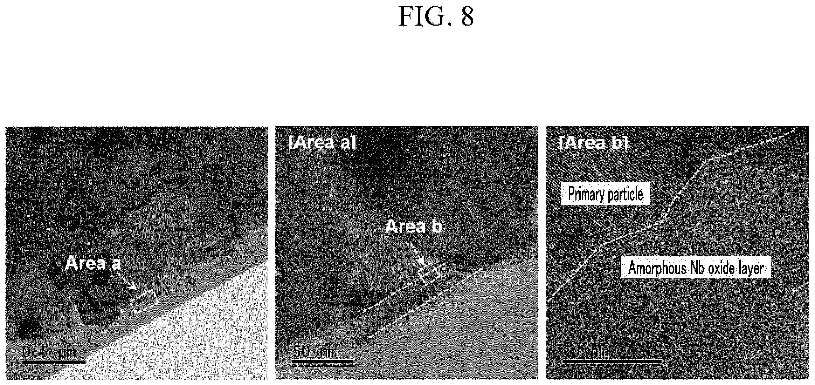

Specifically, by analyzing the structure of the secondary particle surface for the positive electrode active material cross-section, the result is shown in Fig. 8.

Referring to FIG. 8, it can be seen that a coating layer containing amorphous niobium oxide having a thickness of 20 to 30 nm is formed on the secondary particle interface of the positive active material manufactured according to the present exemplary embodiment.

### (Experimental Example 9) Qualitative analysis using XPS on secondary particle surface

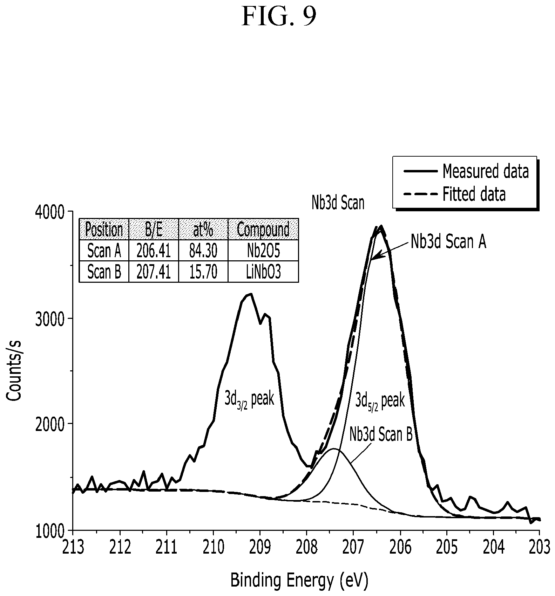

After conducting surface XPS (X-ray photoelectron spectroscopy) analysis on the positive active material manufactured in exemplary embodiment 3, the result is shown in FIG. 9. For peak analysis, only 3d5/2 peak was used.

Referring to FIG. 9, in the positive electrode active material manufactured according to the present exemplary embodiment, a second coating layer including first and second niobium compounds is formed on the secondary particle surface portion. At this time, as for the niobium compound included in the second coating layer, it was confirmed that Nb₂O₅ and LiNbO₃ were present at 84.3at% and 15.7at%, respectively, based on the total of the first and second niobium compounds.

The present invention is not limited to the exemplary embodiments and can be manufactured in various different forms, and a person of an ordinary skill in the technical field to which the present invention belongs is without changing the technical idea or essential features of the present invention. It will be understood that the invention may be embodied in other specific forms. Therefore, it should be understood that the exemplary embodiments described above are exemplary in all respects and not restrictive.

## Claims

1. A positive electrode active material for a lithium secondary battery, wherein:
the positive electrode active material is a lithium metal oxide particle in the form of a secondary particle including a plurality of primary particles, and
the positive electrode active material comprises:
a first coating layer positioned on at least part of the primary particle surface; and
a second coating layer positioned on at least part of the secondary particle surface
wherein, the first coating layer contains a first niobium compound,
the second coating layer contains the first niobium compound and a second niobium compound having a different composition from the first niobium compound.

2. The positive electrode active material of claim 1, wherein:
the primary particle on which the first coating layer is positioned is positioned inside the secondary particle.

3. The positive electrode active material of claim 1, wherein:
the first niobium compound does not contain lithium.

4. The positive electrode active material of claim 1, wherein:
at least one of the first niobium compound and the second niobium compound contains an amorphous structure.

5. The positive electrode active material of claim 3, wherein:
the first niobium compound is at least one of Nb₂O₅, NbO and NbO₂.

6. The positive electrode active material of claim 1, wherein:
the second niobium compound is at least one of LiNbO₃, Nb₂O₅, Li₃NbO₄ and LiNb₃O₈.

7. The positive electrode active material of claim 1, wherein:
an average thickness of the first coating layer is less than 5nm.

8. The positive electrode active material of claim 1, wherein:
an average thickness of the second coating layer is less than 30nm.

9. The positive electrode active material of claim 1, wherein:
the second niobium compound is LiNbO₃, and
a content of the LiNbO₃ is 15.7 at% or more based on the total of the first and second niobium compounds included in the positive active material.

10. The positive electrode active material of claim 1, wherein:
a content of niobium in the positive active material is 4,000ppm or less based on the total of the positive active material.

11. A method of manufacturing a positive electrode active material for lithium secondary battery, comprising:
preparing a coating composition comprising niobium;
obtaining a sintered body by mixing a metal precursor and a lithium raw material and then sintering them;
preparing a mixture by adding the coating composition and the sintered body; and
heating the mixture after drying the mixture;
wherein the heating temperature is in the range of 100 degrees to 500 degrees.

12. The method of claim 11, wherein:
the step of preparing a coating composition is performed by a method of mixing by adding ammonium niobium oxalate to distilled water.

13. The method of claim 11, wherein:
a heating time of the heating step is in the range of 3hr to 10hr.

14. A lithium secondary battery comprising:
a positive electrode comprising the positive electrode active material of any one of claims 1 to 10;
a negative electrode; and
a non-aqueous electrolyte.
